# EUROPÄISCHE PATENTSCHRIFT

(11) **EP 3 556 122 B1**
(45) Veröffentlichungstag und Bekanntmachung des Hinweises auf die Patenterteilung: **08.04.2020**
(21) Anmeldenummer: 18768822.1
(22) Anmeldetag: 05.09.2018
(51) Int. Cl.: H04W 4/40, H04L 29/06, H04W 12/02

(54) **VERFAHREN ZUM BETREIBEN EINER SENDEEINRICHTUNG EINES KRAFTFAHRZEUGS, SENDEEINRICHTUNG FÜR EIN KRAFTFAHRZEUG SOWIE KRAFTFAHRZEUG**
METHOD FOR OPERATING A TRANSMITTING DEVICE OF A MOTOR VEHICLE, TRANSMITTING DEVICE FOR A MOTOR VEHICLE, AND MOTOR VEHICLE
PROCÉDÉ POUR FAIRE FONCTIONNER UN DISPOSITIF D'ÉMISSION D'UN VÉHICULE À MOTEUR, DISPOSITIF D'ÉMISSION POUR UN VÉHICULE À MOTEUR ET VÉHICULE À MOTEUR

(30) Priorität: 11.09.2017 DE 102017215937
(43) Veröffentlichungstag der Anmeldung: 23.10.2019
(73) Patentinhaber: Audi AG, 85045 Ingolstadt (DE)
(72) Erfinder: WILLMANN, Konstantin, 85053 Ingolstadt (DE); MIELKE, Tobias, 85057 Ingolstadt (DE)
(86) Internationale Anmeldenummer: PCT/EP2018/073813
(87) Internationale Veröffentlichungsnummer: WO 2019/048451

(56) Entgegenhaltungen:
- EP-A1- 2 573 727
- US-A1- 2017 126 680

## Beschreibung

Die Erfindung betrifft ein Verfahren zum Betreiben einer Sendeeinrichtung eines Kraftfahrzeugs gemäß dem Oberbegriff von Patentanspruch 1, eine Sendeeinrichtung für ein Kraftfahrzeug sowie ein Kraftfahrzeug mit einer Sendeeinrichtung.

Ein derartiges Verfahren zum Betreiben einer Sendeeinrichtung eines Kraftfahrzeugs ist bereits aus der DE 10 2011 005 657 A1 bekannt. Bei diesem Verfahren wird von einem unverkauften Fahrzeug bis zum Zeitpunkt eines Kaufs des Fahrzeugs ein voreingestelltes Signal gesendet, wodurch eine konstante Ortung des Fahrzeugs ermöglicht wird. Die konstante Ortung des Fahrzeugs wird somit erlaubt, bis ein Käufer das Fahrzeug von einem Platz fährt und das voreingestellte Signal deaktiviert wird.

Weiterhin ist aus der DE 10 2015 109 275 A1 ein Verfahren zum Orten einer gewünschten Vorrichtung, insbesondere eines Fahrzeugs, durch ein Positionserfassungsmodul, welches in einer tragbaren Rechenvorrichtung angeordnet ist, bekannt. Hierbei wird ein Kommunikationssignal des Fahrzeugs über eine Kommunikationsstrecke mittels des Positionserfassungsmoduls empfangen. Anschließend wird mittels des Positionserfassungsmoduls eine Position des Fahrzeugs hinsichtlich der tragbaren Rechenvorrichtung korreliert. Das Positionserfassungsmodul umfasst ein Ortungsmodul, mittels welchem Signale, welche von der gewünschten Vorrichtung empfangen werden, insbesondere das Kommunikationssignal, analysiert werden können. Bei einer Deaktivierung des Ortungsmoduls wird das Analysieren der empfangenen Signale, insbesondere des empfangenen Kommunikationsignals gestoppt.

Aus der US 2011/0001638 A1 ist darüber hinaus ein Verfahren zur Steuerung von ortsgebundenen Funktionen für ein Fahrzeug bekannt. Diese ortsgebundenen Funktionen können mittels einer privaten Kennung freigeschaltet werden.

Überdies ist aus der EP 2 573 727 A1 eine Fahrzeugeinheit mit einer Datenerfassungseinrichtung zum Sammeln von Fahrzeugdaten bekannt.

Aufgabe der vorliegenden Erfindung ist es, ein Verfahren zum Betreiben einer Sendeeinrichtung eines Kraftfahrzeugs sowie eine Sendeeinrichtung für ein Kraftfahrzeug zu schaffen, mittels welchen ein Besitzer eines Kraftfahrzeugs ein Sendeverhalten des Kraftfahrzeugs besonders vorteilhaft anpassen kann.

Diese Aufgabe wird erfindungsgemäß durch ein Verfahren zum Betreiben einer Sendeeinrichtung eines Kraftfahrzeugs und durch eine Sendeeinrichtung gemäß der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Ein erster Aspekt der Erfindung betrifft ein Verfahren zum Betreiben einer Sendeeinrichtung eines Kraftfahrzeugs, bei welchem die Sendeeinrichtung in einem Privatmodus oder in einem Sendemodus betrieben wird. In dem Sendemodus überträgt die Sendeeinrichtung Fahrzeugdaten an eine fahrzeugexterne Recheneinrichtung. In dem Privatmodus unterbindet die Sendeeinrichtung ein Übertragen der Fahrzeugdaten. Das bedeutet, dass die Sendeeinrichtung zum einen in dem Privatmodus betrieben werden kann, in welchem die Fahrzeugdaten nicht an die fahrzeugexterne Recheneinrichtung übertragen werden. Alternativ kann die Sendeeinrichtung in dem Sendemodus betrieben werden, in welchem die Fahrzeugdaten von der Sendeeinrichtung an die fahrzeugexterne Recheneinrichtung übertragen werden. Die jeweilige Position des Kraftfahrzeugs kann beispielsweise mittels eines globalen Navigationssystems ermittelt werden und in Form der Fahrzeugdaten mittels der Sendeeinrichtung für die fahrzeugexterne Recheneinrichtung bereitgestellt werden.

Um zu ermöglichen, dass ein Besitzer des Kraftfahrzeugs ein Sendeverhalten des Kraftfahrzeugs besonders vorteilhaft anpassen kann, ist es vorgesehen, dass ein Umschalten von dem Sendemodus in den Privatmodus erfolgt, sobald eine erfolgreiche Authentifizierung einer vorgegebenen Benutzerhandlung erfasst worden ist. Hierbei erfolgt das Umschalten nur dann beziehungsweise erst dann, wenn die Authentifizierung erfolgreich ist. Dabei kann das Umschalten von dem Sendemodus in den Privatmodus in Abhängigkeit von einem mittels der Sendeeinrichtung empfangenen eindeutigen Kennwort von dem Besitzer erfolgen. Mit anderen Worten empfängt die Sendeeinrichtung das eindeutige Kennwort beispielsweise von dem Besitzer des Kraftfahrzeugs und schaltet infolgedessen von dem Sendemodus in den Privatmodus um. Das bedeutet, dass die in dem Sendemodus betriebene Sendeeinrichtung bei Empfangen des eindeutigen Kennworts das Übertragen der Fahrzeugdaten an die fahrzeugexterne Recheneinrichtung unterbindet. Bei dem eindeutigen Kennwort handelt es sich beispielsweise um ein Passwort und/oder um eine PIN und/oder um biometrische Daten und/oder um eine Kennung auf einem RFID-Chip, welchen der Besitzer bei sich trägt. Der Besitzer des Kraftfahrzeugs kann somit mittels Eingeben des eindeutigen Kennworts als der eindeutigen Benutzerhandlung ein Umschalten der Sendeeinrichtung bewirken. Folglich umfasst die vorgegebene Benutzerhandlung eine Authentisierung des Besitzers gegenüber dem Kraftfahrzeug, sowie eine das Umschalten charakterisierende Aktion des Besitzers. Es ist somit dem autorisierten Besitzer des Kraftfahrzeugs möglich, das Sendeverhalten seines Kraftfahrzeugs hinsichtlich der Fahrzeugdaten entsprechend seinen Bedürfnissen anzupassen. Beispielsweise kann die Sendeeinrichtung eine Mobile-Key-Funktion des Kraftfahrzeugs unterstützen. Bei der Mobile-Key-Funktion überträgt ein Smartdevice einen digitalen Schlüssel an das Kraftfahrzeug, um dieses zu bedienen, insbesondere aufzusperren, zu starten und/oder zu verschließen. Im Rahmen der Mobile-Key-Funktion überträgt die Sendeeinrichtung im Sendemodus Fahrzeugdaten, welche den von dem Smartdevice empfangenen digitalen Schlüssel charakterisieren beziehungsweise eine Bestätigung charakterisieren, dass das Kraftfahrzeug mittels des von dem Smartdevice empfangenen digitalen Schlüssels bedienbar ist, an die fahrzeugexterne Recheneinrichtung. Im Privatmodus unterbleibt die Übertragung der Fahrzeugdaten.

Erfindungsgemäß ist vorgesehen, dass die Sendeeinrichtung bei Empfangen einer Statusinformation eines Fahrzeugparameters von dem Privatmodus in den Sendemodus umschaltet. Beispielsweise kann es sich bei dem Fahrzeugparameter um einen Ortsparameter handeln, welcher von einem jeweiligen Ort abhängt, an welchem sich das Kraftfahrzeug befindet, und/oder um ein Landparameter handeln, welcher von einem jeweiligen Land abhängt, in welchem sich das Kraftfahrzeug befindet. Dabei beschreibt die Statusinformation den jeweiligen Ort beziehungsweise das jeweilige Land. Somit kann die Sendeeinrichtung, welche in dem Privatmodus betrieben wird, bei Erreichen des Orts beziehungsweise bei Überfahren einer Landesgrenze und somit einer Anordnung in einem anderen Land anhand der zugehörigen Statusinformation von dem Privatmodus in den Sendemodus umgeschaltet werden. Wird das Kraftfahrzeug beispielsweise in einem ersten Land in dem Privatmodus betrieben, sodass beispielsweise eine Ortung des Kraftfahrzeugs nicht möglich ist, so schaltet die Sendeeinrichtung bei Überfahren der Landesgrenze und somit einer Anordnung des Kraftfahrzeug in einem zu dem ersten Land unterschiedlichen zweiten Land von dem Privatmodus in den Sendemodus um, sodass das Kraftfahrzeug anschließend geortet werden kann. Somit kann das Kraftfahrzeug auch bei einem Betrieb in dem Privatmodus im Falle eines Diebstahls beziehungsweise einer widerrechtlichen Entwendung beispielsweise bei Überfahren der Ländergrenze geortet werden.

Es ist alternativ oder zusätzlich erfindungsgemäß vorgesehen, dass die Sendeeinrichtung in Abhängigkeit von einer Uhrzeit von dem Privatmodus in den Sendemodus umschaltet. Beispielsweise schaltet die Sendeeinrichtung nach 12 Uhr nachts von dem Privatmodus in den Sendemodus um, um bei einem nächtlichen wiederrechtlichen Entwenden des Kraftfahrzeugs das Kraftfahrzeug orten zu können.

Es hat sich als weiterhin vorteilhaft erwiesen, wenn die Sendeeinrichtung in Abhängigkeit von einem Zündungszustand als Fahrzeugparameter von dem Privatmodus in den Sendemodus umschaltet. Unter dem Zündungszustand ist beispielsweise eine verstrichen Anzahl an Klemme 15-Wechseln zu verstehen. Beispielsweise kann die Sendeeinrichtung nach einem dritten Klemme 15-Wechsel während eines Betriebs in dem Privatmodus, wieder in den Sendemodus zurückschalten. Alternativ kann die Sendeeinrichtung bei einer Ermittlung von "Klemme 15 an" und/oder bei einer Ermittlung von "Klemme 15 aus" von dem Privatmodus in den Sendemodus schalten. Dadurch kann beispielsweise eine Ortung des Kraftfahrzeugs für einzelne mit dem Kraftfahrzeug durchgeführte Fahrten unterbunden werden, indem das Umschalten von dem Privatmodus in den Sendemodus in Abhängigkeit von dem Zündungszustand und folglich in Abhängigkeit von einem Starten des Kraftfahrzeugs erfolgt.

In einer vorteilhaften Ausgestaltung der Erfindung ist vorgesehen, dass das Umschalten von dem Privatmodus in den Sendemodus erfolgt, sobald eine erneute erfolgreiche Authentifizierung einer vorgegebenen Benutzerhandlung erfasst worden ist. Das bedeutet, dass sowohl das Umschalten von dem Sendemodus in den Privatmodus als auch das Umschalten von dem Privatmodus in den Sendemodus erst bei einer erfolgreichen Authentifizierung mittels der Sendeeinrichtung möglich ist. Somit kann das Sendeverhalten des Kraftfahrzeugs lediglich von dem autorisierten Besitzer des Kraftfahrzeugs beispielsweise durch Eingabe dessen eindeutigen Kennworts angepasst werden. Folglich kann lediglich der autorisierte Besitzer des Kraftfahrzeugs entscheiden, wann die Sendeeinrichtung in dem Sendemodus betrieben wird und somit beispielsweise im Rahmen einer Diebstahlsicherungsfunktion geortet werden kann und wann die Sendeeinrichtung in dem Privatmodus betrieben wird, in welchem beispielsweise eine Ortung des Kraftfahrzeugs nicht möglich ist.

In diesem Zusammenhang hat es sich als vorteilhaft erwiesen, wenn die Sendeeinrichtung eine Ortungseinrichtung umfasst, wobei die Ortungseinrichtung im Sendemodus Koordinatendaten, welche eine jeweilige Position des Kraftfahrzeugs charakterisieren, als die Fahrzeugdaten an die fahrzeugexterne Recheneinrichtung überträgt und die Ortungseinrichtung im Privatmodus das Übertragen der Koordinatendaten unterbindet. Mit anderen Worten weist die Sendeeinrichtung die Ortungseinrichtung auf, und die Ortungseinrichtung stellt im Sendemodus die Koordinatendaten für die fahrzeugexterne Recheneinrichtung bereit und stellt im Privatmodus die Koordinatendaten nicht für die fahrzeugexterne Recheneinrichtung bereit. Anhand der Koordinatendaten kann die fahrzeugexterne Recheneinrichtung das Kraftfahrzeug orten. Somit ist in dem Sendemodus eine Diebstahlsicherung möglich, wohingegen im Privatmodus eine Privatssphäre des Besitzers gewahrt werden kann.

In einer alternativen oder zusätzlichen vorteilhaften Ausgestaltung der Erfindung ist vorgesehen, dass die Sendeeinrichtung bei Betrieb in dem Privatmodus nach Ablauf eines definierten Zeitintervalls in den Sendemodus umschaltet. Beispielsweise kann der autorisierte Besitzer mittels des eindeutigen Kennworts das Umschalten der Sendeeinrichtung von dem Sendemodus in den Privatmodus auslösen. Nach Ablauf des definierten Zeitintervalls, welches beispielsweise in der Sendeeinrichtung hinterlegt ist, schaltet die Sendeeinrichtung von dem Privatmodus in den Sendemodus zurück. Somit ist für das definierte Zeitintervall beispielsweise ein Orten des Kraftfahrzeugs aufgrund dessen Betrieb in dem Privatmodus nicht möglich. Zumindest für das definierte Zeitintervall kann somit eine Privatsphäre eines das Kraftfahrzeug steuernden Fahrers, beispielsweise des autorisierten Besitzers, gewahrt werden. Beispielsweise sind unterschiedlichen eindeutigen Benutzerhandlungen unterschiedliche definierte Zeitintervalle zugeordnet. Ein erstes eingegebenes Kennwort kann ein Betreiben der Sendeeinrichtung in dem Privatmodus für ein erstes definiertes Zeitintervall auslösen, während ein zu dem ersten Kennwort unterschiedliches zweites eingegebenes Kennwort ein Betreiben der Sendeeinrichtung in dem Privatmodus für ein zu dem ersten Zeitintervall unterschiedliches, zweites Zeitintervall auslöst. Hierdurch kann der Besitzer beispielsweise durch Übergabe des Kennworts an eine weitere Person dieser weiteren Person ein Betreiben des Kraftfahrzeugs in dem Privatmodus für das definierte Zeitintervall ermöglichen. Beispielsweise kann dieses übergebene Kennwort nach einmaliger Benutzung seine Gültigkeit verlieren, um eine möglichst hohe Sicherheit und eine möglichst hohe Kontrolle für den Besitzer zu ermöglichen.

In einer weiteren Ausgestaltung der Erfindung hat es sich als vorteilhaft gezeigt, wenn die vorgegebene Benutzerhandlung mittels einer fahrzeugseitigen Benutzerschnittstelle erfasst wird. Beispielsweise kann die Sendeeinrichtung das eindeutige Kennwort von dem Besitzer über eine fahrzeugseitige Erfassungseinrichtung des Kraftfahrzeugs als fahrzeugseitige Benutzerschnittstelle empfangen. Mit anderen Worten wird mittels der fahrzeugseitigen Erfassungseinrichtung die eindeutige Benutzerhandlung empfangen und eine Information über den Empfang der eindeutigen Benutzerhandlung an die Sendeeinrichtung übertragen. Es ist somit nötig, dass der autorisierte Besitzer des Kraftfahrzeugs sich innerhalb des Kraftfahrzeugs befindet, um zumindest das Umschalten von dem Sendemodus in den Privatmodus zu bewirken. Hierdurch kann ausgeschlossen werden, dass das Kraftfahrzeug mittels einer fahrzeugexternen Einrichtung von dem Sendemodus in den Privatmodus umgeschaltet wird. Das Umschalten von dem Privatmodus in den Sendemodus kann ebenfalls über die fahrzeugseitige Benutzerschnittstelle oder alternativ über die fahrzeugexterne Einrichtung erfolgen.

Dabei hat es sich als vorteilhaft erwiesen, wenn die vorgegebene Benutzerhandlung die Eingabe des Kennworts ist, welches mit einem in einem Speicher des Kraftfahrzeugs hinterlegten Kennwort zur Authentifizierung abgeglichen wird. Hierbei wird das hinterlegte Kennwort für den Vergleich mit dem eingegebenen Kennwort mittels der Sendeeinrichtung von dem Speicher des Kraftfahrzeugs empfangen. Insbesondere ist das auf dem Speicher hinterlegte Kennwort fahrzeugspezifisch und statisch. Somit kann sich der Besitzer gegenüber dem Kraftfahrzeug mittels durch Eingabe des Kennworts als eindeutige Benutzerhandlung authentisieren, um von dem Kraftfahrzeug anhand des eingegebenen Kennworts im Zuge des Vergleichs authentifiziert zu werden. Dies hat den Vorteil, dass das hinterlegte Kennwort lediglich in der Sendeeinrichtung und das von dem Besitzer einzugebende Kennwort lediglich bei dem autorisierten Besitzer hinterlegt sein kann und somit ein Zugriff von der externen Einrichtung auf die Sendeeinrichtung zum Umschalten von dem Sendemodus in den Privatmodus besonders schwierig ist.

In einer alternativen vorteilhaften Ausgestaltung der Erfindung ist vorgesehen, dass die vorgegebene Benutzerhandlung die Eingabe des Kennworts ist und mittels einer fahrzeugexternen Servereinrichtung ein Kennwort generiert wird, welches im Zuge der Authentifizierung mit dem eingegebenen Kennwort abgeglichen wird. Anschließend kann das Umschalten der Sendeeinrichtung bei Empfangen des mittels der fahrzeugexternen Servereinrichtung generierten Kennworts bei einem erfolgreichen Abgleich mit dem von dem Besitzer empfangenen eindeutigen Kennwort erfolgen. Mit anderen Worten generiert die fahrzeugexterne Servereinrichtung das generierte Kennwort und übermittelt dieses an die Sendeeinrichtung um nach einem erfolgreichen Vergleich mit dem eingegebenen Kennwort das Umschalten von dem Sendemodus in den Privatmodus zu bewirken. Beispielsweise kann der autorisierte Besitzer der fahrzeugexternen Servereinrichtung beispielsweise mittels eines Smartdevices mitteilen, dass er beabsichtig, die Sendeeinrichtung von dem Sendemodus in den Privatmodus umzuschalten. Infolgedessen generiert die fahrzeugexterne Servereinrichtung das eindeutige Kennwort, welches diese direkt an die Sendeeinrichtung übermitteln kann oder dem autorisierten Besitzer ausgeben kann, sodass dieser die vorgegebene Benutzerhandlung, wie beispielsweise die Eingabe des Kennworts, vornehmen kann. Durch das eingegebene Kennwort kann sich der autorisierte Besitzer beispielsweise gegenüber der fahrzeugexternen Servereinrichtung eindeutig authentisieren. Vorteilhafterweise ist hierdurch eine besonders einfache Authentisierung beziehungsweise Authentifizierung des autorisieren Besitzers gegenüber der Sendeeinrichtung beziehungsweise des Besitzers mittels der Sendeeinrichtung möglich. Das mittels der fahrzeugexternen Servereinrichtung generierte Kennwort kann beispielsweise lediglich für eine definierte Zeitspanne valide sein um eine besonders hohe Sicherheit zu gewährleisten. Nach Generieren des Kennworts kann die fahrzeugexterne Servereinrichtung dieses an den Besitzer und/oder an die Sendeeinrichtung übertragen. Nach Eingabe des Kennworts von dem Besitzer an die Sendeeinrichtung, beispielsweise mittels der fahrzeugseitigen Benutzerschnittstelle, kann die Sendeeinrichtung das eingegebene Kennwort mit dem von der fahrzeugexternen Servereinrichtung generierten Kennwort vergleichen. Hierfür kann die Sendeeinrichtung das generierte Kennwort von der fahrzeugexternen Servereinrichtung anfragen. Alternativ oder zusätzlich kann die Sendeeinrichtung das eingegebene Kennwort für den Vergleich an die fahrzeugexterne Servereinrichtung übertragen, welche nach einem erfolgreichen Vergleich eine Authentifizierungsinformation an die Sendeeinrichtung übertragen kann. Anhand dieser Authentifizierungsinformation kann die Sendeeinrichtung die vorgegebene Benutzerhandlung erfolgreich Authentifizieren.

Ein zweiter Aspekt der Erfindung betrifft eine Sendeeinrichtung für ein Kraftfahrzeug, welche dazu eingerichtet ist, ein Verfahren, wie es bereits im Zusammenhang mit dem erfindungsgemäßen Verfahren beschrieben worden ist, durchzuführen.

Ein dritter Aspekt der Erfindung betrifft ein Kraftfahrzeug mit einer Sendeeinrichtung, wie sie bereits im Zusammenhang mit der erfindungsgemäßen Sendevorrichtung beschrieben worden ist.

Vorteile und vorteilhafte Weiterbildungen des erfindungsgemäßen Verfahrens sind als Vorteile und vorteilhafte Weiterbildungen der erfindungsgemäßen Sendeeinrichtung sowie des erfindungsgemäßen Kraftfahrzeugs anzusehen. Aus diesem Grund sind die Vorteile und vorteilhafte Weiterbildungen der erfindungsgemäßen Sendeeinrichtung und des erfindungsgemäßen Kraftfahrzeugs hier nicht noch einmal beschrieben.

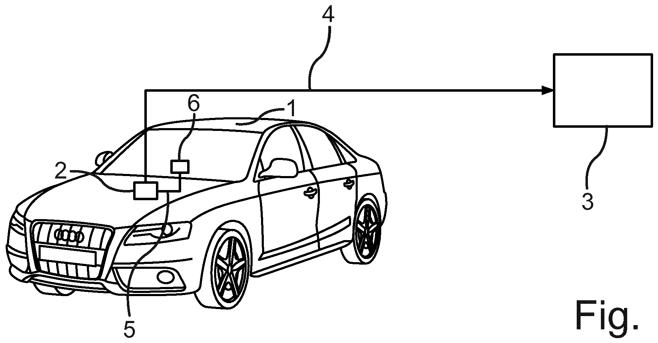

Im Folgenden sind Ausführungsbeispiele der Erfindung beschrieben. Hierzu zeigt die einzige Fig. eine schematische Ansicht eines Kraftfahrzeugs mit einer Sendeeinrichtung, mittels welcher Fahrzeugdaten, welche eine jeweilige Position des Kraftfahrzeugs charakterisieren, an eine fahrzeugexterne Recheneinrichtung übertragbar sind.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

Das im Folgenden beschriebene Ausführungsbeispiel bezieht sich auf eine eine Ortungseinrichtung 2 zur Diebstahlsicherung umfassende Sendeeinrichtung. Die Sendeeinrichtung kann weitere, im Folgenden nicht näher erläuterte Einrichtungen umfassen, mittels welchen Fahrzeugdaten an eine fahrzeugexterne Recheneinrichtung 3 übertragen werden können.

In der einzigen Fig. ist in einer schematischen Ansicht ein Kraftfahrzeug 1 mit der Ortungseinrichtung 2 dargestellt. Die Ortungseinrichtung 2 ist Bestandteil der nicht dargestellten Sendeeinrichtung. Des Weiteren ist die fahrzeugexterne Recheneinrichtung 3 dargestellt, an welche Koordinatendaten 4 als Fahrzeugdaten mittels der Ortungseinrichtung 2 übertragbar sind. Anhand der Koordinatendaten 4 kann das Kraftfahrzeug 1 mittels der fahrzeugexternen Recheneinrichtung 3 geortet werden.

Die Ortungseinrichtung 2 wird in einem Privatmodus oder einem Ortungsmodus betrieben, wobei die Ortungseinrichtung 2 in dem Ortungsmodus die Koordinatendaten 4 an die fahrzeugexterne Recheneinrichtung 3 überträgt und in dem Privatmodus ein Übertragen der Koordinatendaten 4 an die fahrzeugexterne Recheneinrichtung 3 unterbindet.

Um zu ermöglichen, dass ein Besitzer des Kraftfahrzeugs 1 ein Sendeverhalten des Kraftfahrzeugs 1 besonders vorteilhaft anpassen kann, ist es vorgesehen, dass ein Umschalten von dem Ortungsmodus in den Privatmodus erfolgt, sobald eine eindeutige Authentifizierung einer vorgegebenen Benutzerhandlung erfasst worden ist. Bei der eindeutigen Benutzerhandlung handelt es sich vorliegend um eine Eingabe eines Kennworts 5. Somit erfolgt das Umschalten von dem Ortungsmodus in den Privatmodus in Abhängigkeit von dem mittels der Ortungseinrichtung 2 empfangenen eindeutigen Kennwort 5. Hierbei erfolgt sowohl das Umschalten von dem Privatmodus in den Ortungsmodus als auch das Umschalten von dem Ortungsmodus in den Privatmodus in Abhängigkeit von einer jeweiligen Authentifizierung anhand der eindeutigen Benutzerhandlung. Dabei empfängt die Ortungseinrichtung 2 das eindeutige Kennwort 5 von einer fahrzeugseitigen Erfassungseinrichtung 6 des Kraftfahrzeugs 1 als fahrzeugseitige Benutzerschnittstelle. Über diese fahrzeugseitige Erfassungseinrichtung 6 authentisiert sich der Besitzer des Kraftfahrzeugs 1 durch die Eingabe des Kennworts 5 als eindeutige Benutzerhandlung. Die fahrzeugseitige Erfassungseinrichtung 6 überträgt das eingegebene Kennwort 5 an die Ortungseinrichtung 2, welche den Besitzer anhand des eingegebenen Kennworts 5 authentifiziert. Hierbei kann das eingegebene Kennwort 5 mit einem in einem Speicher des Kraftfahrzeug hinterlegten fahrzeugspezifischen und statischen Kennwort verglichen werden oder mit einem mittels einer fahrzeugexternen Servereinrichtung oder der fahrzeugexternen Recheneinrichtung 3, auf eine Anfrage des Besitzers hin generierten Kennwort verglichen werden.

Nach Empfangen des eingegebenen Kennworts 5 durch die Ortungseinrichtung 2, kann die Ortungseinrichtung 2 das eingegebene Kennwort 5 mit dem auf der fahrzeugexternen Servereinrichtung oder der fahrzeugexternen Recheneinrichtung 3 hinterlegten Kennwort vergleichen und in Abhängigkeit von dem Vergleich zwischen dem Privatmodus und dem Ortungsmodus umschalten. Hierdurch kann eine Gültigkeit des eingegebenen Kennworts 5 validiert werden.

Die Ortungseinrichtung 2 kann nach Empfangen des eingegebenen Kennworts 5 von dem Privatmodus in den Ortungsmodus umschalten oder nach Ablauf eines definierten Zeitintervalls von dem Privatmodus in den Ortungsmodus umschalten. Alternativ kann die Ortungseinrichtung 2 bei Empfangen einer Statusinformation eines Fahrzeugparameters in Abhängigkeit von der Statusinformation von dem Privatmodus in den Ortungsmodus umschalten. Bei der Statusinformation kann es sich um einen Ort an welchem sich das Kraftfahrzeug 1 befindet, oder um einen Zündungszustand des Kraftfahrzeugs 1 handeln. Unter dem Zündungszustand ist eine Anzahl an in dem Privatmodus getätigten Klemme 15-Wechsel zu verstehen.

Dem beschriebenen Verfahren zum Betreiben der Ortungseinrichtung 2 liegt die Erkenntnis zugrunde, dass mobile Onlinedienste in einem Fahrzeug sich in Komfortdienste und sicherheitsrelevante Onlinedienste unterteilen. Zu den sicherheitsrelevanten Onlinediensten gehören neben einem Notruf auch jene Dienste, welche in Zusammenhang mit einem Diebstahlschutz stehen. Eine Einführung eines Privacy Modus ermöglicht eine Deaktivierung der Komfortdienste über eine Mensch-Maschine-Schnittstelle (Human-Machine-Interface) im Fahrzeug. Dabei wird einem Fahrer des Fahrzeugs ein Werkzeug an die Hand gegeben, welches ihm erlaubt, seine Privatsphäre zu schützen und gemäß seinen Anonymitätsbedürfnissen zu kontrollieren, welche Daten von dem Fahrzeug an einen externen Server übersendet werden dürfen und welche nicht. In einem Dormant Mode, welcher auch als Schlummermodus bezeichnet wird, bucht sich eine SIM-Karte des Fahrzeugs aus einem Mobilfunknetz aus, wodurch alle Dienste abgeschaltet werden und keine Daten vom Fahrzeug an den externen Server versendet werden. Dies verhindert in der Folge eine Ortung des Fahrzeugs und garantiert eine maximale Privatsphäre. Einige sicherheitsrelevante Onlinedienste erfordern eine dauerhafte Erreichbarkeit des Fahrzeugs durch den externen Sever. Aus Sicherheitsgründen sind sie bisweilen so entworfen, dass sie das Ausbuchen der SIM-Karte verhindern. Somit ist eine Funktionsweise im Notfall garantiert und das Fahrzeug kann bei einer Meldung eines Diebstahls zuverlässig geortet werden. Ein Notruf erfordert keine ständige Erreichbarkeit des Fahrzeugs, da der Notruf ausschließlich aus dem Fahrzeug heraus angestoßen wird, entweder durch einen Unfall oder durch eine manuelle Betätigung einer SOS-Taste. Im Schlummermodus ist das Fahrzeug nicht ortbar. Erst in einem Notfall erfolgt ein umgehendes Einbuchen der SIM-Karte in das Mobilfunknetz zur Absetzung des Notrufs.

Hieraus ergeben sich die Nachteile, dass alle genannten sicherheitsrelevanten Onlinedienste mit ihren Anforderungen der dauerhaften Erreichbarkeit des Fahrzeugs in einem Zielkonflikt mit Privatsphärebedürfnissen des Fahrers des Fahrzeugs stehen. Mit einer Kaufentscheidung für ein Fahrzeug mit Diebstahlortungssystem verliert der Fahrer eine Möglichkeit, seine Privatsphäre durch Ausbuchen der SIM-Karte im Fahrzeug vollumfänglich zu schützen. Das könnte dazu führen, dass er sich zum Schutz seiner Anonymität komplett gegen einen Kauf von mobilen Onlinediensten entscheidet.

Um diese Nachteile zu umgehen sollen mobile Onlinedienste, welche für ein Verfolgen im Diebstahlfall relevant sind, insbesondere sicherheitsrelevante Onlinedienste wie ein Fahrzeugverfolgungssytem (vehicle tracking system) oder ein Fernfahrzeugverfolgen (remote vehicle tracking) durch Eingabe eines nur dem Besitzer des Kraftfahrzeugs 1 bekannten Codes insbesondere des eindeutigen Kennworts 5 entweder temporär oder dauerhaft deaktiviert werden können. Dieser Code kann fahrzeugbezogen statisch sein oder fallweise durch die fahrzeugexterne Recheneinrichtung 3 generiert werden und bei Eingabe in die fahrzeugseitige Erfassungseinrichtung 6 anschließend mittels der Ortungseinrichtung 2 online abgeglichen werden. Hierdurch hat der Besitzer des Kraftfahrzeugs 1 jederzeit die Möglichkeit, zwischen einer Sicherheit eines Diebstahltrackingsystems und einer Anonymität durch Ausbuchen der SIM-Karte in den Schlummermodus, bei welchem es sich um den oben beschriebenen Privatmodus handelt, zu wählen.

Privatsphäre und Diebstahlschutz sind für viele Fahrer des Kraftfahrzeugs 1 entscheidende Aspekte bei einem Fahrzeugkauf. Eine Festlegung auf nur einen der beiden Aspekte Sicherheit und Anonymität zum Zeitpunkt eines Erwerbs des Kraftfahrzeugs 1 wäre nicht erforderlich. Stattdessen könnte der Besitzer seine Sicherheitsbedürfnisse und Anonymitätsbedürfnisse in jeder Situation selbst abwägen und das Sendeverhalten seines Kraftfahrzeugs 1 ohne weiteres selbstständig anpassen.

Bei dem Verfahren kann eine Anforderung oder eine Erzeugung eines Autorisierungsmerkmals beziehungsweise des Codes, welchen das eindeutige Kennwort 5 darstellt, entweder in einem Webportal der fahrzeugexternen Recheneinrichtung 3 oder direkt im Kraftfahrzeug 1 erfolgen. Es kann eine Eingabemöglichkeit des Autorisierungsmerkmals im Kraftfahrzeug 1 mit anschließender Autorisierung im Kraftfahrzeug 1 oder Autorisierung über die fahrzeugexterne Recheneinrichtung 3 oder über eine fahrzeugexterne Servereinrichtung erfolgen um ausgewählte sicherheitsrelevante Onlinedienste zu deaktivieren. Sollte ein zu deaktivierender sicherheitsrelevanter Onlinedienst im Zusammenhang mit finanziellen Vergünstigungen bei Versicherungen oder anderen Institutionen stehen, sollten diese Parteien über die Deaktivierung in Kenntnis gesetzt werden.

Je nach gewünschtem Sicherheitslevel ist ein Vergleich des eingegebenen Kennworts mit dem im Kraftfahrzeug 1 hinterlegten Kennwort oder mit dem mittels der fahrzeugexternen Servereinrichtung oder der fahrzeugexternen Recheneinrichtung 3 generierten Kennwort zu wählen. In jedem Fall sollte es dem Besitzer des Kraftfahrzeugs 1 möglich sein, das Kennwort, mit welchem das eingegebene Kennwort 5 verglichen werden soll, zu ändern. Der Besitzer kann das auf dem Speicher hinterlegte Kennwort im Kraftfahrzeug 1 ändern oder das durch die fahrzeugexterne Servereinrichtung oder die fahrzeugexterne Recheneinrichtung 3 generierte Kennwort über ein mit der fahrzeugexternen Servereinrichtung oder der fahrzeugexternen Recheneinrichtung 3 verbundenes Webportal ändern. Eine Dauer der Ausbuchung der SIM-Karte kann durch den Besitzer vorgegeben werden oder an bestimmte Zustände des Kraftfahrzeugs 1 gekoppelt werden. Das Ausbuchen der SIM-Karte kann für 24 Stunden oder für immer oder bis zu einem dritten Klemme 15-Wechsel währen des Betriebs in dem Privatmodus etc. erfolgen.

Insgesamt zeigen die Beispiele, wie durch die Erfindung eine Passwortgesicherte Autorisierung zur Deaktivierung geschützter Dienste, wie vorliegend einer Ortung des Kraftfahrzeugs 1, geschaffen werden kann. Mittels der Autorisierung kann eine fahrzeugseitige Deaktivierung von geschützten Diensten, wie vorliegend die Ortung des Kraftfahrzeugs 1, durch Eingabe zusätzlicher Autorisierungsmerkmale erfolgen.

## Patentansprüche

1. Verfahren zum Betreiben einer Sendeeinrichtung (2) eines Kraftfahrzeugs (1), bei welchem die Sendeeinrichtung (2) in einem Privatmodus oder in einem Sendemodus betrieben wird, wobei die Sendeeinrichtung (2) in dem Sendemodus Fahrzeugdaten (4) an eine fahrzeugexterne Recheneinrichtung (3) überträgt und in dem Privatmodus ein Übertragen der Fahrzeugdaten (4) unterbindet,
**dadurch gekennzeichnet, dass**
ein Umschalten von dem Sendemodus in den Privatmodus erfolgt, sobald eine erfolgreiche Authentifizierung einer vorgegebenen Benutzerhandlung erfasst worden ist, wobei die Sendeeinrichtung (2) in Abhängigkeit von einer Uhrzeit von dem Privatmodus in den Sendemodus umschaltet und/oder die Sendeeinrichtung (2) bei Empfangen einer Statusinformation eines Fahrzeugparameters von dem Privatmodus in den Sendemodus umschaltet, wobei es sich bei dem Fahrzeugparameter um eines der Folgenden handelt:
- einen Ortsparameter,
- einen Landparameter oder
- eine verstrichene Anzahl an Klemme 15-Wechseln.

2. Verfahren nach Anspruch 1, wobei das Umschalten von dem Privatmodus in den Sendemodus erfolgt, sobald eine erneute erfolgreiche Authentifizierung einer vorgegebenen Benutzerhandlung erfasst worden ist.

3. Verfahren nach einem der vorhergehenden Ansprüche, wobei die Sendeeinrichtung (2) eine Ortungseinrichtung umfasst und wobei die Ortungseinrichtung im Sendemodus Koordinatendaten, welche eine jeweilige Position des Kraftfahrzeugs (1) charakterisieren, als die Fahrzeugdaten (4) an die fahrzeugexterne Recheneinrichtung (3) überträgt und die Ortungseinrichtung im Privatmodus das Übertragen der Koordinatendaten unterbindet.

4. Verfahren nach einem der vorhergehenden Ansprüche, wobei die Sendeeinrichtung (2) bei Betrieb in dem Privatmodus nach Ablauf eines definierten Zeitintervalls in den Sendemodus umschaltet.

5. Verfahren nach einem der vorhergehenden Ansprüche, wobei die Sendeeinrichtung (2) in Abhängigkeit von einem Zündungszustand als Fahrzeugparameter von dem Privatmodus in den Sendemodus umschaltet.

6. Verfahren nach einem der vorhergehenden Ansprüche, wobei die vorgegebene Benutzerhandlung mittels einer fahrzeugseitigen Benutzerschnittstelle (6) erfasst wird.

7. Verfahren nach einem der vorhergehenden Ansprüche, wobei die vorgegebene Benutzerhandlung die Eingabe eines Kennworts (5) ist, welches mit einem in einem Speicher des Kraftfahrzeugs hinterlegten Kennwort zur Authentifizierung abgeglichen wird.

8. Verfahren nach einem der Ansprüche 1 bis 6, wobei die vorgegebene Benutzerhandlung die Eingabe eines Kennworts (5) ist und mittels einer fahrzeugexternen Servereinrichtung ein Kennwort generiert wird, welches im Zuge der Authentifizierung mit dem eingegebenen Kennwort (5) abgeglichen wird.

9. Sendeeinrichtung (2) für ein Kraftfahrzeug (1), welche dazu eingerichtet ist, ein Verfahren nach einem der vorhergehenden Ansprüche durchzuführen.

10. Kraftfahrzeug (1) mit einer Sendeeinrichtung (2) nach Anspruch 9.

## Claims

1. Method for operating a transmitting device (2) of a motor vehicle (1), in which the transmitting device (2) is operated in a private mode or in a transmitting mode, wherein the transmitting device (2) in the transmitting mode transmits vehicle data (4) to a computing device (3) external to the vehicle and in the private mode transmission of the vehicle data (4) is stopped,
**characterised in that**
a switchover from the transmitting mode into the private mode takes place as soon as a successful authentication of a specified user action has been captured, wherein the transmitting device (2) switches over from the private mode into the transmitting mode in dependence on a time and/or the transmitting device switches over from the private mode into the transmitting mode when receiving status information of a vehicle parameter, wherein the vehicle parameter is one of the following:
- a location parameter,
- a country parameter or
- an elapsed number of terminal 15 changes.

2. Method according to claim 1, wherein the switchover from the private mode into the transmitting mode takes place as soon as a new successful authentication of a specified user action has been captured.

3. Method according to any one of the preceding claims, wherein the transmitting device (2) comprises a location device and wherein in the transmitting mode the location device transmits coordinate data, which characterise a respective position of the motor vehicle (1), as the vehicle data (4) to the computing device (3) external to the vehicle and in the private mode the location device stops the transmission of the coordinate data.

4. Method according to any one of the preceding claims, wherein the transmitting device (2) switches over into the transmitting mode when operating in the private mode after expiry of a defined time interval.

5. Method according to any one of the preceding claims, wherein the transmitting device (2) switches over from the private mode into the transmitting mode in dependence on an ignition state as a vehicle parameter.

6. Method according to any one of the preceding claims, wherein the specified user action is captured by means of a vehicle-side user interface (6).

7. Method according to any one of the preceding claims, wherein the specified user action is the input of a password (5), which is compared with a password stored in a memory of the motor vehicle for authentication.

8. Method according to any one of claims 1 to 6, wherein the specified user action is the input of a password (5) and a password is generated by means of a server device external to the vehicle, which password is compared in the course of the authentication with the entered password (5).

9. Transmitting device (2) for a motor vehicle (1), which is configured to carry out a method according to any one of the preceding claims.

10. Motor vehicle (1) with a transmitting device (2) according to claim 9.

## Revendications

1. Procédé pour faire fonctionner un dispositif d'émission (2) d'un véhicule à moteur (1), dans lequel le dispositif d'émission (2) est actionné en mode privé ou en mode d'émission, dans lequel le dispositif d'émission (2) transfère en mode d'émission des données de véhicule (4) à un ordinateur extérieur au véhicule (3) et interrompt un transfert des données de véhicule (4) en mode privé,
**caractérisé en ce que** :
un passage du mode d'émission au mode privé se fait aussitôt qu'une authentification couronnée de succès d'un traitement utilisateur prédéfini a été détectée, dans lequel le dispositif d'émission (2) passe du mode privé au mode d'émission en fonction d'une heure et/ou le dispositif d'émission (2) passe du mode privé au mode d'émission lors de la réception d'une information d'état d'un paramètre du véhicule, dans lequel il s'agit en ce qui concerne le paramètre du véhicule de l'un des suivants :
- un paramètre local,
- un paramètre de site ou
- un nombre écoulé de changements de borne 15.

2. Procédé selon la revendication 1, dans lequel le passage du mode privé au mode d'émission se fait aussitôt qu'une nouvelle authentification couronnée de succès d'un traitement utilisateur prédéfini a été détectée.

3. Procédé selon l'une quelconque des revendications précédentes, dans lequel le dispositif d'émission (2) comprend un dispositif de localisation et dans lequel le dispositif de localisation transfère en mode d'émission des données de coordonnées, qui caractérisent une position respective du véhicule à moteur (1), comme données de véhicule (4) à l'ordinateur extérieur au véhicule (3) et le dispositif de localisation interrompt en mode privé le transfert des données de coordonnées.

4. Procédé selon l'une quelconque des revendications précédentes, dans lequel le dispositif d'émission (2), lors d'un fonctionnement en mode privé, passe en mode d'émission après écoulement d'un intervalle de temps défini.

5. Procédé selon l'une quelconque des revendications précédentes, dans lequel le dispositif d'émission (2) passe du mode privé au mode d'émission en fonction d'un état d'allumage comme paramètre du véhicule.

6. Procédé selon l'une quelconque des revendications précédentes, dans lequel le traitement utilisateur prédéfini est détecté au moyen d'une interface utilisateur (6) côté véhicule.

7. Procédé selon l'une quelconque des revendications précédentes, dans lequel le traitement utilisateur prédéfini est la saisie d'un mot de passe (5) qui est comparé pour authentification à un mot de passe enregistré dans une mémoire du véhicule à moteur.

8. Procédé selon l'une quelconque des revendications 1 à 6, dans lequel le traitement utilisateur prédéfini est la saisie d'un mot de passe (5) et l'on génère au moyen d'un dispositif serveur extérieur au véhicule un mot de passe qui est comparé au mot de passe saisi (5) au cours de l'authentification.

9. Dispositif d'émission (2) pour un véhicule à moteur (1) qui est conçu pour réaliser un procédé selon l'une quelconque des revendications précédentes.

10. Véhicule à moteur (1) avec un dispositif d'émission (2) selon la revendication 9.
